(19)

Europäisches Patentamt

European Patent Office

Office européen des brevets

(11) **EP 4 696 541 A1**

(12) **EUROPEAN PATENT APPLICATION**
published in accordance with Art. 153(4) EPC

(43) Date of publication:
**18.02.2026 Bulletin 2026/08**

(21) Application number: **25744515.5**

(22) Date of filing: **16.01.2025**

(51) International Patent Classification (IPC):
*B60L 15/20* (2006.01)    *B60W 50/023* (2012.01)
*B60W 50/00* (2006.01)    *B60W 10/08* (2006.01)

(52) Cooperative Patent Classification (CPC):
Y02T 10/72

(86) International application number:
**PCT/CN2025/072873**

(87) International publication number:
**WO 2025/157073 (31.07.2025 Gazette 2025/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.01.2024  CN 202410101908**

(71) Applicant: **Chongqing Changan Technology Co., Ltd.**
**Chongqing 401133 (CN)**

(72) Inventors:
• **YANG, Wenbiao**
  **Chongqing 401133 (CN)**
• **HE, Yihua**
  **Chongqing 401133 (CN)**
• **WANG, Peng**
  **Chongqing 401133 (CN)**
• **DENG, Jian**
  **Chongqing 401133 (CN)**

(74) Representative: **Elzaburu S.L.P.**
**Paseo de la Castellana 259C**
**Torre de Cristal, planta 28**
**28046 Madrid (ES)**

(54) **TORQUE CONTROL METHOD AND APPARATUS, DEVICE, AND STORAGE MEDIUM**

(57)     A torque control method and apparatus, a device, and a storage medium. The torque control method includes: switching from a primary vehicle control unit to a backup vehicle control unit; determining a wheel-end required torque, a wheel-end actual torque, and an axle-end actual torque corresponding to the vehicle; in a case where a difference between the wheel-end required torque and the wheel-end actual torque is greater than or equal to a preset threshold, adjusting the wheel-end actual torque to the wheel-end required torque based on a first adjustment coefficient; determining an axle-end required torque of the vehicle based on a preset allocation weight and the axle-end actual torque; adjusting the axle-end actual torque to the axle-end required torque based on a second adjustment coefficient. Thus, after the switching from the primary vehicle control unit to the backup vehicle control unit, the wheel-end required torque can be transitioned to the wheel-end required torque, and the axle-end actual torque can be transitioned to the axle-end required torque, solving the problem of sudden changes or shakes in torque when directly switching from the primary vehicle control unit to the backup vehicle control unit.

FIG. 2

## Description

This application claims priority to Chinese Patent Application No. 202410101908.5, filed with the China National Intellectual Property Administration on January 23, 2024 and entitled "TORQUE CONTROL METHOD AND APPARATUS, DEVICE, AND STORAGE MEDIUM", the contents of which are hereby incorporated by reference in its entirety.

## TECHNICAL FIELD

The present application relates to the field of vehicle technology and, in particular, to a torque control method and apparatus, a device, and a storage medium.

## BACKGROUND

During vehicle driving, there may be an abnormal situation with a vehicle control unit (vehicle control unit, VCU), in which a loss of control of power of a vehicle may occur, and a driver may not be able to operate the vehicle normally, resulting in an occupant of the vehicle being in danger. To prevent a hazard caused by a VCU malfunction during vehicle driving, it is currently possible to directly switch from a primary VCU to a backup VCU (i.e., a redundant VCU) when a system detects a failure in the primary VCU. The backup VCU then controls a torque of the vehicle to ensure basic driving functions of the vehicle remain operational.

However, in the method described above, when a direct switching from the primary VCU to the backup VCU is performed to control the torque of the vehicle, the torque may experience sudden changes or shakes, causing a jolting sensation for a user. This results in a poor user experience.

## SUMMARY

The present application provides a torque control method and apparatus, a device, and a storage medium to at least solve the technical problem of sudden changes or shakes in torque that may occur when directly switching from the primary VCU of the vehicle to the backup VCU for torque control in related technologies, which causes a jolting sensation for a user. The technical solution of the present application is as follows.

According to a first aspect involved in the present application, a torque control method is provided, including: in a case where a primary vehicle control unit of a vehicle is abnormal, switching from the primary vehicle control unit to a backup vehicle control unit; determining a wheel-end required torque, a wheel-end actual torque, and an axle-end actual torque corresponding to the vehicle; in a case where a difference between the wheel-end required torque and the wheel-end actual torque is greater than or equal to a preset threshold, adjusting the wheel-end actual torque to the wheel-end required torque based on a first adjustment coefficient, where the first adjustment coefficient is used to control a rate of change of the wheel-end actual torque; determining an axle-end required torque of the vehicle based on a preset allocation weight and the axle-end actual torque; adjusting the axle-end actual torque to the axle-end required torque based on a second adjustment coefficient, where the second adjustment coefficient is used to control a rate of change of the axle-end actual torque.

According to the above technical means, the present application can determine the wheel-end required torque, the wheel-end actual torque, and the axle-end actual torque corresponding to the vehicle after the switching from the primary vehicle control unit to the backup vehicle control unit, and adjust the wheel-end actual torque to the wheel-end required torque based on the first adjustment coefficient when the difference between the wheel-end required torque and the wheel-end actual torque is greater than or equal to the preset threshold. Furthermore, based on the preset allocation weight and the axle-end actual torque, the axle-end required torque of the vehicle is determined, and based on the second adjustment coefficient, the axle-end actual torque is adjusted to the axle-end required torque. That is, when the backup vehicle control unit takes over the torque control of the vehicle, the wheel-end actual torque, the wheel-end required torque, the axle-end actual torque, and the axle-end required torque of the vehicle can be calculated, and the wheel-end actual torque can be transitioned to the wheel-end required torque, as well as the axle-end actual torque can be transitioned to axle-end required torque. This solves the technical problem of sudden changes or shakes in torque that may occur and thus brings a jolting sensation to the user when directly switching from the primary VCU of the vehicle to the backup VCU for torque control in the existing technology, thereby improving the user experience.

In a possible implementation, determining the wheel-end required torque, the wheel-end actual torque, and the axle-end actual torque corresponding to the vehicle includes: acquiring a driving speed and a brake pedal opening degree of the vehicle, and determining a creep required torque and an accelerator required torque of the vehicle based on the driving speed and the brake pedal opening degree; determining the wheel-end required torque based on the creep required torque and the accelerator required torque; acquiring a motor actual torque of the vehicle, and determining the wheel-end actual torque and the axle-end actual torque based on the motor actual torque, a preset reduction ratio, a preset transmission ratio, and a preset efficiency.

According to the above technical means, the present application can determine the wheel-end required torque based on the creep required torque and the accelerator required torque of the vehicle, and determine the wheel-end actual torque and the axle-end actual torque based on the motor actual torque, the preset reduction ratio, the preset transmission ratio, and the preset efficiency, in order to facilitate subsequent adjustments to the wheel-end actual torque and the axle-end actual torque, and avoid sudden changes or shaking in torque.

In a possible implementation, the method further includes: in a case where a brake priority function of the vehicle is activated, determining a brake priority torque of the vehicle based on a preset brake priority coefficient, the driving speed of the vehicle, the brake pedal opening degree of the vehicle, and the wheel-end required torque, and determining the brake priority torque as the wheel-end required torque.

According to the above technical means, the present application can determine the brake priority torque as the wheel-end required torque in a case where the brake priority function of the vehicle is activated (i.e., when the brake pedal of the vehicle is pressed, regardless of whether the accelerator pedal is pressed, the accelerator of the vehicle is immediately in an idle state), to avoid the danger caused by excessive torque when the driver incorrectly steps on the accelerator and the brake.

In a possible implementation, the method further includes: acquiring a target gear position of the vehicle, and determining a target torque corresponding to the target gear position, where the target torque is used to indicate a set maximum torque when the vehicle is in the target gear position; and in a case where the target torque is less than the wheel-end required torque, determining the target torque as the wheel-end required torque.

According to the above technical means, the present application can determine the target torque of the vehicle as the wheel-end required torque when the target torque (i.e., the set maximum torque) corresponding to the gear position of the vehicle is less than the wheel-end required torque, in order to avoid the danger caused by excessive torque.

In a possible implementation, the vehicle includes: a first axle and a second axle, the axle-end required torque includes: a first axle-end required torque and a second axle-end required torque, and the axle-end actual torque includes: a first axle-end actual torque and a second axle-end actual torque; the determining the axle-end required torque of the vehicle based on the preset allocation weight and the axle-end actual torque includes: determining the first axle-end required torque and the second axle-end required torque based on the preset allocation weight and the axle-end actual torque; or in a case where the first axle-end required torque is limited, determining the first axle-end required torque based on the preset allocation weight and the axle-end actual torque, and determining the second axle-end required torque based on the wheel-end required torque and the first axle-end actual torque; or in a case where the second axle-end required torque is limited, determining the first axle-end required torque based on the wheel-end required torque and the second axle-end actual torque, and determining the second axle-end required torque based on the preset allocation weight and the axle-end actual torque.

According to the above technical means, the present application can determine the first axle-end required torque and the second axle-end required torque based on the preset allocation weight and the axle-end actual torque, so as to facilitate the subsequent transition of the first axle-end actual torque of the vehicle to the first axle-end required torque and the subsequent transition of the second axle-end actual torque to the second axle-end required torque, avoiding sudden changes or shaking in torque. When the first axle-end required torque is limited, the first axle-end required torque is determined according to the preset allocation weight, and the second axle-end required torque is determined based on the wheel-end required torque and the first axle-end actual torque. That is, the torque at the first axle can be limited, and a torque limited from the first axle can be reallocated to the second axle to maintain the total driving force unchanged. When the second axle-end required torque is limited, the second axle-end required torque is determined according to the preset allocation weight, and the first axle-end required torque is determined based on the wheel-end required torque and the second axle-end actual torque. In this way, the torque at the second axle can be limited, and a torque limited from the second axle can be reallocated to the first axle to maintain the total driving force unchanged.

According to a second aspect of the present application, a torque control apparatus is provided, including: a processing module and a determining module; where the processing module is configured to: in a case where a primary vehicle control unit of a vehicle is abnormal, switch from the primary vehicle control unit to a backup vehicle control unit; the determining module is configured to determine a wheel-end required torque, a wheel-end actual torque, and an axle-end actual torque corresponding to the vehicle; the processing module is further configured to: in a case where a difference between the wheel-end required torque and the wheel-end actual torque is greater than or equal to a preset threshold, adjust the wheel-end actual torque to the wheel-end required torque based on a first adjustment coefficient, where the first adjustment coefficient is used to control a rate of change of the wheel-end actual torque; the determining module is further configured to determine an axle-end required torque of the vehicle based on a preset allocation weight and the axle-end actual torque; the processing module is further configured to adjust the axle-end actual torque to the axle-end required torque based on a second adjustment coefficient, where the second adjustment coefficient is used to control a rate of change of the axle-end actual torque.

In a possible implementation, the torque control apparatus further includes an acquiring module; where the acquiring module is configured to acquire a driving speed and a brake pedal opening degree of the vehicle; the determining module is further configured to determine a creep required torque and an accelerator required torque of the vehicle based on the driving speed and the brake pedal opening degree; the determining module is further configured to determine the wheel-end required torque based on the creep required torque and the accelerator required torque; the acquiring module is further configured to acquire a motor actual torque of the vehicle; the determining module is further configured to determine the wheel-end actual torque and the axle-end actual torque based on the motor actual torque, a preset reduction ratio, a preset transmission ratio, and a preset efficiency.

In a possible implementation, the processing module is further configured to: in a case where a brake priority function of the vehicle is activated, determine a brake priority torque of the vehicle based on a preset brake priority coefficient, the driving speed of the vehicle, the brake pedal opening degree of the vehicle, and the wheel-end required torque, and determine the brake priority torque as the wheel-end required torque.

In a possible implementation, the acquiring module is further configured to acquire a target gear position of the vehicle; the determining module is further configured to determine a target torque corresponding to the target gear position, where the target torque is used to indicate a set maximum torque when the vehicle is in the target gear position; the determining module is further configured to: in a case where the target torque is less than the wheel-end required torque, determine the target torque as the wheel-end required torque.

In a possible implementation, the vehicle includes: a first axle and a second axle, the axle-end required torque includes: a first axle-end required torque and a second axle-end required torque, and the axle-end actual torque includes: a first axle-end actual torque and a second axle-end actual torque; the determining module is further configured to determine the first axle-end required torque and the second axle-end required torque based on the preset allocation weight and the axle-end actual torque; the determining module is further configured to: in a case where the first axle-end required torque is limited, determine the first axle-end required torque based on the preset allocation weight and the axle-end actual torque, and determine the second axle-end required torque based on the wheel-end required torque and the first axle-end actual torque; the determining module is further configured to: in a case where the second axle-end required torque is limited, determine the first axle-end required torque based on the wheel-end required torque and the second axle-end actual torque, and determine the second axle-end required torque based on the preset allocation weight and the axle-end actual torque.

According to a third aspect of the present application, an electronic device is provided, including: a processor, and a memory for storing instructions executable by the processor; where the processor is configured to execute the instructions to implement the method of the first aspect and any possible implementation thereof.

According to a fourth aspect of the present application, a computer-readable storage medium is provided, when instructions in the computer-readable storage medium are executed by a processor of an electronic device, the electronic device is caused to execute the method of the first aspect and any possible implementation thereof.

According to a fifth aspect of the present application, a vehicle is provided, including: the torque control apparatus configured to implement the method of the first aspect and any possible implementation thereof.

According to a sixth aspect of the present application, a computer program product is provided, the computer program product includes computer instructions, and when the computer instructions are executed on an electronic device, the electronic device is caused to perform the method of the first aspect and any possible implementation thereof.

Therefore, the above technical features of the present application have the following beneficial effects.

(1) After the switching from the primary vehicle control unit to the backup vehicle control unit, the wheel-end required torque, the wheel-end actual torque, and the axle-end actual torque corresponding to the vehicle can be determined, and in a case where the difference between the wheel-end required torque and the wheel-end actual torque is greater than or equal to the preset threshold, the wheel-end actual torque is adjusted to the wheel-end required torque based on the first adjustment coefficient. Furthermore, based on the preset allocation weight and the axle-end actual torque, the axle-end required torque of the vehicle is determined, and based on the second adjustment coefficient, the axle-end actual torque is adjusted to the axle-end required torque. That is, when the backup vehicle control unit takes over the torque control of the vehicle, the wheel-end actual torque, the wheel-end required torque, the axle-end actual torque, and the axle-end required torque of the vehicle can be calculated, and the wheel-end actual torque can be transitioned to the wheel-end required torque, and the axle-end actual torque can be transitioned to axle-end required torque. This solves the technical problem of sudden changes or shaking in torque that may occur and thus brings a jolting sensation to the user when directly switching from the primary VCU of the vehicle to the backup VCU for torque control in the existing technology, thereby improving the user experience.

(2) The wheel-end required torque can be determined based on the creep required torque and the accelerator required torque of the vehicle, and the wheel-end actual torque and the axle-end actual torque can be determined based on the motor actual torque, the preset reduction ratio, the preset transmission ratio, and the preset efficiency, so as to facilitate subsequent adjustments made to the wheel-end actual torque and the axle-end actual torque, and avoid sudden changes or shaking in torque.

(3) The brake priority torque can be determined as the wheel-end required torque when the brake priority function of the vehicle is activated (i.e., when the brake pedal of the vehicle is pressed, regardless of whether the accelerator pedal is pressed, the accelerator of the vehicle is immediately in an idle state), to avoid the danger caused by excessive torque when the driver incorrectly steps on the accelerator and the brake.

(4) The target torque of the vehicle can be determined as the wheel-end required torque when the target torque (i.e., the set maximum torque) corresponding to the gear position of the vehicle is less than the wheel-end required torque, so as to avoid the danger caused by excessive torque.

(5) The first axle-end required torque and the second axle-end required torque can be determined based on the preset allocation weight and the axle-end actual torque, so as to facilitate the subsequent transition of the first axle-end actual torque of the vehicle to the first axle-end required torque and the subsequent transition of the second axle-end actual torque to the second axle-end required torque, avoiding sudden changes or shaking in torque. When the first axle-end required torque is limited, the first axle-end required torque is determined according to the preset allocation weight, and the second axle-end required torque is determined based on the wheel-end required torque and the first axle-end actual torque. In this way, the torque at the first axle can be limited, and the torque limited from the first axle can be reallocated to the second axle to maintain the total driving force unchanged. When the second axle-end required torque is limited, the second axle-end required torque is determined according to the preset allocation weight, and the first axle-end required torque is determined based on the wheel-end required torque and the second axle-end actual torque. In this way, the torque at the second axle can be limited, and the torque limited from the second axle can be reallocated to the first axle to maintain the total driving force unchanged.

It should be noted that for the technical effects brought by any one of the implementations in the second to sixth aspects, a reference can be made to the technical effects brought by the corresponding implementations in the first aspect, which will not be repeated here.

It should be understood that the above general description and the subsequent detailed description are only exemplary and explanatory, and should not limit the scope of the present application.

## BRIEF DESCRIPTION OF DRAWINGS

The accompanying drawings are incorporated into the specification and form a part of the specification, illustrating embodiments in accordance with the present application and used together with the specification to explain the principles of the present application, and do not constitute undue limitation to the present application.

FIG. 1 is a schematic structural diagram illustrating a torque control system according to an exemplary embodiment.
FIG. 2 is a flowchart illustrating a torque control method according to an exemplary embodiment.
FIG. 3 is a schematic diagram illustrating a comparison before and after limiting a rate of change of a wheel-end torque according to an exemplary embodiment.
FIG. 4 is a flowchart illustrating another torque control method according to an exemplary embodiment.
FIG. 5 is a schematic diagram illustrating a redundant VCU torque allocation principle according to an exemplary embodiment.
FIG. 6 is a flowchart illustrating a torque control method according to an exemplary embodiment.
FIG. 7 is a flowchart illustrating yet another torque control method according to an exemplary embodiment.
FIG. 8 is a flowchart illustrating yet another torque control method according to an exemplary embodiment.
FIG. 9 is a flowchart illustrating a torque control method according to an exemplary embodiment.
FIG. 10 is a structural block diagram illustrating a redundant VCU torque control system according to an exemplary embodiment.
FIG. 11 is a flowchart illustrating a redundant VCU torque control according to an exemplary embodiment.
FIG. 12 is a block diagram illustrating a torque control apparatus according to an exemplary embodiment.
FIG. 13 is a block diagram illustrating an electronic device according to an exemplary embodiment.

## DESCRIPTION OF EMBODIMENTS

To enable those skilled in the art to better understand the technical solutions of the present application, the technical solutions in the embodiments of the present application will be clearly and completely described below in conjunction with the accompanying drawings.

It should be noted that the terms "first", "second", etc. in the specification and claims of the present application, as well as in the accompanying drawings described above, are used to distinguish similar objects and are not necessarily intended to describe a specific order or sequence. It should be understood that the data used in this way can be interchanged in appropriate circumstances, so that the embodiments described herein can be implemented in order other than those illustrated or described herein. The implementations described in the following exemplary embodiments do not represent all implementations consistent with the present application. On the contrary, they are only examples of apparatus and method consistent with some aspects of the present application as described in the claims attached.

During vehicle driving, there may be an abnormal situation with a VCU, in which a loss of control of power of a vehicle may occur. This means that a driver may not be able to normally operate the vehicle so as to smoothly move the vehicle to a safe location and the driver may thus also be in danger. In order to ensure that the safety hazard described above does not occur when the loss of control of the VCU occurs during driving, to ensure that the vehicle does not lose power during driving, the driver does not lose control of the power of the vehicle, and an occupant of the vehicle does not face danger due to the hazard described above, and to provide a certain level of safety guarantee for every driving, it is currently possible to directly switch from a primary VCU to a backup VCU (i.e., a redundant VCU, where the primary VCU and the backup VCU are mutually redundant) when a system detects a failure in the primary VCU. The backup VCU controls a vehicle torque, takes over a role of a torque control unit of the primary VCU, and undertakes torque control work to ensure that the basic driving functions of the vehicle can operate normally.

However, in the method described above, when a direct switching from the primary VCU to the backup VCU is performed to control the torque of the vehicle during actual driving of the vehicle, the torque may experience sudden changes or shakes, causing a jolting sensation for a user.

Regarding the above technical issues, in order to reduce the inconvenience of using the vehicle for the user, provide better services to the user, and enhance the driving experience of the user, the embodiments in the present disclosure provide a torque control method, the solution is as follows: when a signal of abnormality or failure of the primary VCU is received, the backup VCU starts to take over from the primary VCU, then determines an actual torque and a required torque of the vehicle, and transitions the actual torque to the required torque, so as to ensure that the vehicle does not lose power, resolve the issue of potential sudden changes or shakes in torque after VCU switching, and guarantee a smooth torque transition without causing any jarring sensation to the user.

For ease of understanding, the torque control method provided in the present application will be specifically introduced in conjunction with the accompanying drawings.

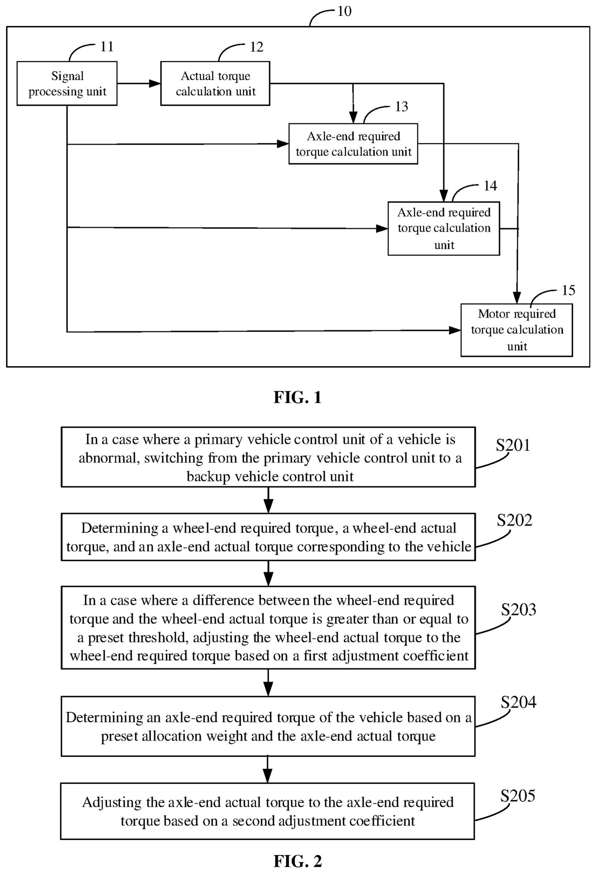

The torque control method provided in embodiments of the present application can be applied to a torque control system. FIG. 1 is a schematic structural diagram illustrating a torque control system according to an exemplary embodiment. As shown in FIG. 1, the torque control system 10 includes: a signal processing unit 11, an actual torque calculation unit 12, a wheel-end required torque calculation unit 13, an axle-end required torque calculation unit 14, and a motor required torque calculation unit 15.

The signal processing unit 11 is configured to perform an input preprocessing on a signal required by an entire torque module and transmit a preprocessed signal to the actual torque calculation unit 12, the wheel-end required torque calculation unit 13, the axle-end required torque calculation unit 14, and the motor required torque calculation unit 15 for torque calculation. The actual torque calculation unit 12 is configured to calculate a wheel-end actual torque and an axle-end actual torque (i.e., a vehicle actual torque) of the vehicle, and output the wheel-end actual torque and the axle-end actual torque to the wheel-end required torque calculation unit 13, the axle-end required torque calculation unit 14, and other control systems for use.

The wheel-end required torque calculation unit 13 is configured to calculate a wheel-end requirement torque and output a part of calculated torque-related parameters to the axle-end required torque calculation unit 14 and the motor required torque calculation unit 15. The axle-end required torque calculation unit 14 is configured to calculate a front axle required torque and a rear axle required torque of the vehicle, and output the front axle required torque and the rear axle required torque to the motor required torque calculation unit 15. The motor required torque calculation unit 15 is configured to calculate a motor required torque. Thus, torque control of the vehicle is enabled based on the signal processing unit 11, the actual torque calculation unit 12, the wheel-end required torque calculation unit 13, the axle-end required torque calculation unit 14, and the motor required torque calculation unit 15.

It should be noted that the wheel-end actual torque is the axle-end actual torque. The intention of the signal processing unit 11 is to integrate input signals of the entire torque control system into one input port for aggregation. The purpose of this is to enable unified management when there is a need to change a software interface.

FIG. 2 is a flowchart illustrating a torque control method according to an exemplary embodiment, which is applied to a vehicle. As shown in FIG. 2, the torque control method includes the following steps.

S201, in a case where a primary vehicle control unit of a vehicle is abnormal, switching from the primary vehicle control unit to a backup vehicle control unit.

Optionally, in the case where the primary vehicle control unit of the vehicle is abnormal, the primary vehicle control unit can be switched to the backup vehicle control unit, at this time, the vehicle receives a backup VCU takeover sign or the vehicle is in a redundant backup VCU takeover state.

S202, determining a wheel-end required torque, a wheel-end actual torque, and an axle-end actual torque corresponding to the vehicle.

Optionally, a front wheel-end required torque and a rear wheel-end required torque can be obtained by comprehensively calculating a creep required torque, an accelerator required torque, and a brake priority torque, and a smoothness limit processing is applied to the front wheel-end required torque and the rear wheel-end required torque.

After the creep required torque and the accelerator required torque are calculated, it is also possible to consider whether to add a parking required torque according to a parking situation (the parking required torque is calibrated as 0).

It should be noted that the vehicle includes front wheels and rear wheels. The wheel-end required torque is a sum of the front wheel-end required torque and the rear wheel-end required torque. The redundant VCU has disabled relevant functions of intelligent driving, so only functions related to human driving need to be considered.

S203, in a case where a difference between the wheel-end required torque and the wheel-end actual torque is greater than or equal to a preset threshold, adjusting the wheel-end actual torque to the wheel-end required torque based on a first adjustment coefficient.

Here the first adjustment coefficient is used to control a rate of change of the wheel-end actual torque.

Optionally, when the vehicle no longer receives the redundant VCU takeover sign, or when a duration of the vehicle being in the redundant takeover state exceeds two cycles and an absolute value of a difference between the wheel-end required torque and a vehicle actual torque (i.e., the wheel-end actual torque) is less than a preset threshold, a wheel-end torque arbitration is performed for the wheel-end required torque to obtain a final wheel-end required torque (i.e., a powertrain assembly torque is obtained by limiting the wheel-end required torque and a vehicle speed limit torque, a maximum wheel-end torque of a powertrain assembly, and a minimum wheel-end torque of the powertrain assembly). The wheel-end actual torque can be directly switched to the final wheel-end required torque.

When the duration of the vehicle being in the redundant takeover state is less than two cycles and the absolute value of the difference between the wheel-end required torque and the vehicle actual torque is greater than or equal to the preset threshold, the wheel-end torque arbitration is performed for the wheel-end required torque to obtain the final wheel-end required torque, and the vehicle actual torque is transitioned to the final wheel-end required torque based on the first adjustment coefficient.

It should be noted that an enabling precondition for the wheel-end torque arbitration is that the vehicle is in a drivable mode. The wheel-end actual torque directly drops to 0 N·m when any one of the following conditions is met: a vehicle is currently not in a ready (ready) state; a gear position recognized by an internal software system is "P"; an actual gear position of the vehicle is "N"/"P"; a validity bit of a gear position signal used by the internal software system indicates invalid.

The obtained final wheel-end required torque should not exceed a limit of a wheel-end speed limit torque calculated by a redundant VCU fault diagnosis system and a maximum long-term available torque of a powertrain, and simultaneously should not be lower than a limit of a minimum long-term available torque of the powertrain.

In a possible implementation, the larger the first adjustment coefficient, the greater the rate of change of the wheel-end torque of the vehicle. Therefore, a rate of torque change during the transition from the vehicle actual torque to the final wheel-end required torque needs to be limited, so as to prevent transmission system impact caused by excessively rapid torque changes.

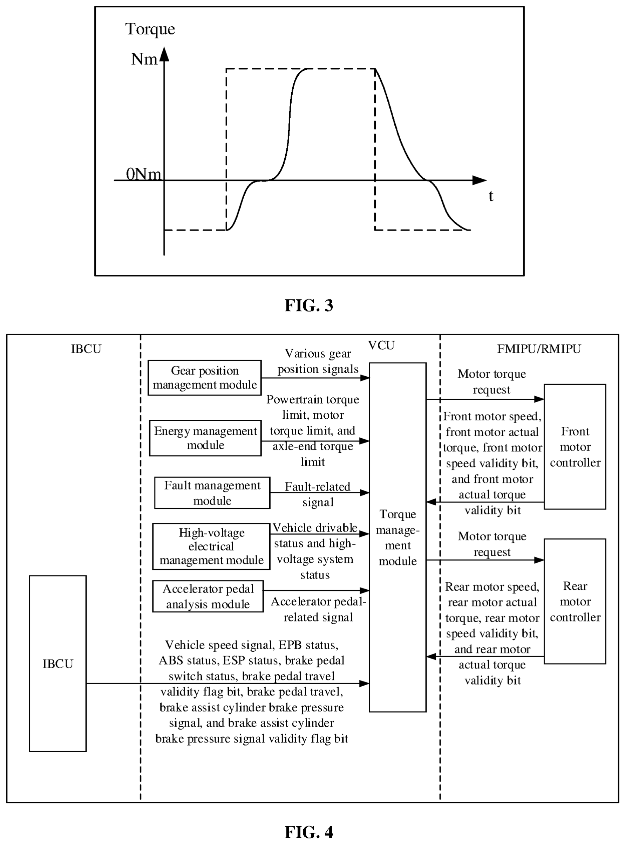

Exemplarily, one cycle can be 10 ms, and the preset threshold can be 200 N. FIG. 3 is a schematic diagram illustrating a comparison before and after limiting a rate of change of a wheel-end torque according to an exemplary embodiment. As shown in FIG. 3, the dashed line represents a change curve of the vehicle actual torque in a case where no limit is applied to the rate of change of the wheel-end torque during the wheel-end torque switching, while the solid line represents a change curve of the vehicle actual torque in a case where a limit is applied to the rate of change of the wheel-end torque during the wheel-end torque switching.

S204: determining an axle-end required torque of the vehicle based on a preset allocation weight and the axle-end actual torque.

Optionally, a front axle-end required torque and a rear axle-end required torque can be calculated according to a preset allocation ratio (i.e., the preset allocation weight) and the axle-end actual torque (i.e., the vehicle actual torque). Subsequently, a torque verification is performed on the front axle-end required torque and the rear axle-end required torque, followed by an axle-end torque limit to obtain a final front axle-end required torque and a final rear axle-end required torque.

Exemplarily, before the vehicle receives the redundant takeover sign, if an availability flag bit of the vehicle actual torque indicates unavailable, a front axle allocation ratio and a rear axle allocation ratio of the vehicle are both set to 0. If the vehicle is a two-wheel drive vehicle, an allocation ratio for a drive axle shall be set to 1, while an allocation ratio for the other axle, i.e., the non-drive axle shall be set to 0. If the vehicle actual torque is less than 50N, all axle-end torque shall be allocated to the rear axle.

If none of the above conditions apply, the determination can be made according to a value of the vehicle actual torque. Specifically: if the vehicle actual torque is within [-1, 0], the vehicle actual torque is rounded to -1; if the vehicle actual torque is within [0, 1], it is rounded to 1. If the vehicle actual torque is outside the range [-1, 1], no processing is performed. The rear axle allocation ratio can be obtained by dividing the rear axle-end actual torque by the vehicle actual torque, and then the front axle allocation ratio is 1 minus the rear axle allocation ratio; or the front axle allocation ratio can be obtained by dividing the front axle-end actual torque by the vehicle actual torque, and then the rear axle allocation ratio is 1 minus the front axle allocation ratio.

The front axle allocation ratio and the rear axle allocation ratio can be calculated using the method described above before the vehicle receives the redundant VCU takeover sign. After the vehicle receives the redundant VCU takeover sign, the front axle allocation ratio and the rear axle allocation ratio gradually transition from allocation ratios before the redundant VCU takeover to a specified allocation ratio (i.e., the preset allocation ratio).

Exemplarily, the preset allocation ratio can be 0.5:0.5. The preset allocation ratio includes a front axle preset allocation ratio and a rear axle preset allocation ratio. The allocation ratios can only be positive values within the range [0, 1].

It should be noted that the vehicle includes a front axle and a rear axle. The axle-end required torque is a sum of a front axle-end required torque and a rear axle-end required torque. The axle-end actual torque is a sum of a front axle-end actual torque and a rear axle-end actual torque.

Optionally, after the front axle-end required torque and the rear axle-end required torque are calculated according to the preset allocation ratio, an axle-end torque verification needs to be performed on the front axle-end required torque and the rear axle-end required torque. A final front axle actual torque and a final rear axle actual torque are computed based on an axle-end actual torque of a motor and a calculated rear axle torque allocation ratio. This ensures that if an output torque of a front motor is insufficient, the deficit is allocated to the rear wheels.

**In** addition, considering the off-road mode and the intervention through chassis involvement, in order to prevent conflicts between chassis intervention and the calculated allocation ratio during the torque allocation, an additional logic design can be made to avoid conflicts with chassis intervention.

It should be noted that when an electronic stability program (electronic stability program, ESP) is not involved, the front axle-end required torque can be calculated based on the preset allocation ratio, the rear axle-end required torque equals the wheel-end required torque minus the front axle-end actual torque. The purpose is to ensure that the output torques of the front motor and a rear motor equal a driver required torque. Meanwhile, considering that a total torque allocated on the front and rear axle-ends cannot exceed a driving required torque, a limitation needs to be imposed to prevent overflow. Since the front axle-end required torque here is calculated according to the preset allocation ratio, an obtained result is already a limited torque value. Therefore, only the rear axle-end required torque needs to be limited: first take a minimum value between a maximum short-term motor torque at the rear axle and a rear axle allocated torque, and then take a maximum value between the resulting minimum value and a minimum short-term motor torque at the rear axle, as the rear axle-end required torque.

When ESP is involved and the vehicle is in a four-wheel drive off-road mode, to keep a total driver demand torque constant, ESP only limits a torque on a slipping axle and does not reallocate torque to a non-slipping axle.

If a front axle torque limit request is received (i.e., the front axle-end required torque is limited), the front axle-end required torque can be calculated according to the preset allocation ratio, and the rear axle-end required torque equals the wheel-end required torque minus the front axle-end actual torque, at this time, a torque limited from the front axle is reallocated to the rear axle, maintaining a total driving force unchanged.

If a rear axle torque limit request is received (i.e., the rear axle-end required torque is limited), the rear axle-end required torque is calculated according to the preset allocation ratio, and the front axle-end required torque equals the wheel-end required torque minus the rear axle-end actual torque. Meanwhile, considering that the total torque allocated to the front and rear axles cannot exceed a driving required torque, a limitation needs to be imposed to prevent overflow. Since the rear axle-end required torque here is calculated according to the preset allocation ratio, an obtained result is already a limited torque value. Therefore, only the front axle-end required torque needs to be limited: first take a minimum value between a maximum short-term motor torque at the front axle and a front axle allocated torque, and then take a maximum value between the resulting minimum value and a minimum short-term motor torque at the front axle, as the front axle-end required torque.

If ESP limits both the front axle and the rear axle simultaneously, that is, both the front and rear axle torques are calculated according to their respective preset allocation ratios, at this time, no further verification is needed for both the front axle and the rear axle, only the axle-end required torques calculated based on the preset ratios are sent. If ESP is involved but the vehicle is not in a four-wheel drive off-road mode, the main consideration is safety-related slipping limit safety factors, so VCU no longer performs reverification and reallocation for the allocated torques. In addition, filtering processing needs to be performed on the front and rear axle required torques obtained by calculating, and the purpose is to avoid sudden torque changes. The wheel-end required torque of the front axle and the wheel-end required torque of the rear axle shall not exceed limitations of maximum long-term available torques of the front and rear axles and shall not be lower than limitations of minimum long-term available wheel-end torques of the front and rear axles.

S205: adjusting the axle-end actual torque to the axle-end required torque based on a second adjustment coefficient.

Here the second adjustment coefficient is used to control a rate of change of the axle-end actual torque.

Optionally, based on the second adjustment coefficient (i.e., a preset filter coefficient), the axle-end actual torque can be gradually transitioned to the axle-end required torque obtained after the axle-end torque verification.

Exemplarily, the preset filter coefficient can be 0.2.

In a possible implementation, to ensure smooth adjustment of the axle-end actual torque, a filtering processing can be applied. Based on the filter coefficient, the axle-end actual torque is gradually transitioned to the axle-end required torque.

Optionally, based on a preset reduction ratio, the front axle-end required torque and the rear axle-end required torque can be converted to a motor side and then be limited to obtain a motor required torque. Furthermore, a motor actual torque is transitioned to the motor required torque.

It should be noted that no more front motor torque request command is sent before a front motor torque request command of the redundant powertrain taken over by the redundant VCU. Torque output control is performed only after the redundant VCU takes over. The front motor required torque and the rear motor required torque must not exceed a limit value of a maximum long-term rear axle motor torque or a limit value of a minimum long-term rear axle motor torque calculated by a mechanical system capability estimation module. A smoothing processing can be performed on the motor required torque, and a rate of change of the motor required torque should be less than or equal to a certain value.

Enabling conditions for activating a motor anti-shake function are: the vehicle is in a drivable mode; a target motor mode is a torque control mode; none of an antilock brake system (antilock brake system, ABS), an autonomous emergency braking (autonomous emergency braking, AEB), and a dynamic parking is active; the motor required torque is not within the range from -20 N·m to 20 N·m, and it is necessary to avoid frequent entry and exit of the motor anti-shake function.

A minimum motor anti-shake allowable torque capacity may be calculated. Specifically, when VCU requests a motor anti-shake function to be activated, the minimum motor anti-shake allowable torque of the front/rear axle shall not exceed a difference between a limit value of a minimum short-term motor torque of the corresponding axle and the motor required torque, and shall not exceed a limit value of the minimum motor anti-shake allowable torque. When VCU requests the motor anti-shake function of the rear axle to be deactivated, the limit value of the minimum motor anti-shake allowable torque of the rear axle is sent as 0.

A maximum motor anti-shake allowable torque capacity may be calculated. Specifically, when VCU requests a motor anti-shake function to be activated, the maximum motor anti-shake allowable torque of the front/rear axle shall not exceed a difference between a limit value of a maximum short-term motor torque of the corresponding axle and the motor required torque, and shall not exceed a limit value of the corresponding maximum motor anti-shake allowable torque. When VCU requests the motor anti-shake function to be deactivated, the limit value of the maximum motor anti-shake allowable torque is sent as 0.

Exemplarily, an initial value for the motor required torque can be 220 N·m/s. The limit value of the minimum motor anti-shake allowable torque can be -100 N·m. An initial value of the maximum motor anti-shake allowable torque can be 100 N·m.

FIG. 4 is a frame diagram illustrating a redundant VCU torque control principle according to an exemplary embodiment. As shown in FIG. 4, the VCU can interact with an integrated brake control unit (integrated brake control unit, IBCU), a front motor controller FMIPU, and a rear motor controller RMIPU. Specifically, the VCU includes a torque management module, a gear position management module, an energy management module, a fault management module, a high-voltage electrical management module, and an accelerator pedal analysis module.

The torque management module of the VCU can obtain: a vehicle speed signal, an electrical park brake (electrical park brake, EPB) status, an ABS status, an ESP status, a brake pedal switch status, a brake pedal travel validity flag bit, a brake pedal travel, a brake assist cylinder brake pressure signal, and a brake assist cylinder brake pressure signal validity flag bit from IBCU; various gear position signals from the gear position management module; a powertrain torque limit, a motor torque limit, and an axle-end torque limit from the energy management module; a fault-related signal from the fault management module; a vehicle drivable status and a high-voltage system status from the high-voltage electrical management module; and an accelerator pedal-related signal from the accelerator pedal analysis module, for subsequent torque management.

The front motor controller sends a motor torque request to the torque management module of the VCU, and the front motor controller responds to the torque management module of the VCU with a front motor speed, a front motor actual torque, a front motor speed validity bit, and a front motor actual torque validity bit. The rear motor controller sends a motor torque request to the torque management module of the VCU, and the rear motor controller responds to the torque management module of the VCU with a rear motor speed, a rear motor actual torque, a rear motor speed validity bit, and a rear motor actual torque validity bit.

It should be noted that the gear position management module in FIG. 4 can achieve gear position control, provide signals related to respective gear positions, and implement a gear-shift-related logic. The energy management module in FIG. 4 can provide a power system torque limit, a motor torque limit, and an axle-end torque limit value for limiting the torque at the time of torque calculation. The fault management module in FIG. 4 can input the fault-related signal to the VCU to make a decision and calculate a limit value for a corresponding fault state to output to other systems. The high-voltage electrical management module in FIG. 4 can determine the vehicle drivable status and the high-voltage system status. The accelerator pedal analysis module in FIG. 4 can output the accelerator pedal-related signal.

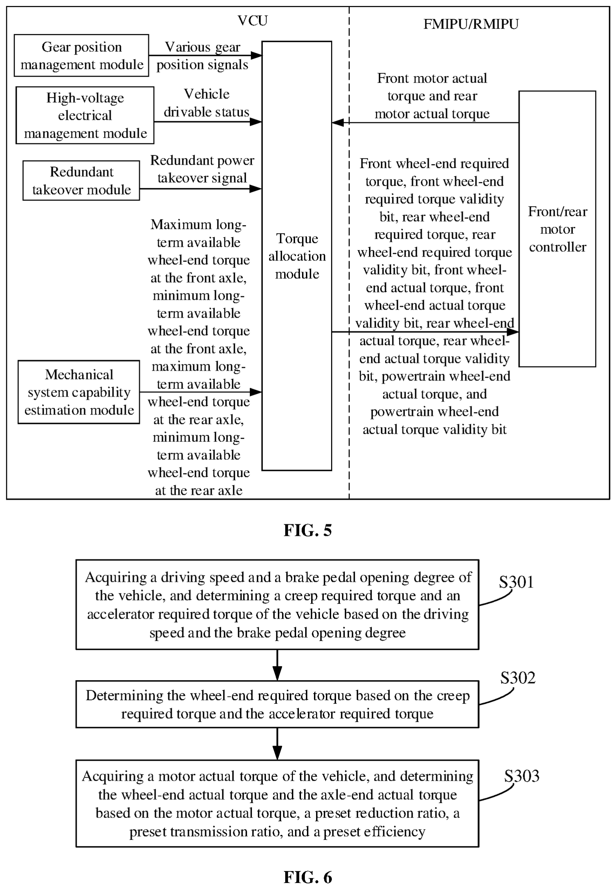

FIG. 5 is a frame diagram illustrating a redundant VCU torque allocation principle according to an exemplary embodiment. As shown in FIG. 5, the VCU includes a torque allocation module, a gear position management module, a high-voltage electrical management module, a redundant takeover module, and a mechanical system capability estimation module. Specifically, the gear position management module can send various gear position signals to the torque allocation module; the high-voltage electrical management module can send the vehicle drivable status to the torque allocation module; the redundant takeover module can send a redundant power takeover signal to the torque allocation module; and the mechanical system capability estimation module can send a maximum long-term available wheel-end torque of the front axle, a minimum long-term available wheel-end torque of the front axle, a maximum long-term available wheel-end torque of the rear axle, a minimum long-term available wheel-end torque of the rear axle to the torque allocation module.

The torque allocation module can receive the front motor actual torque and the rear motor actual torque sent by the front/rear motor controller, and send a front wheel-end required torque, a front wheel-end required torque validity bit, a rear wheel-end required torque, a rear wheel-end required torque validity bit, a front wheel-end actual torque, a front wheel-end actual torque validity bit, a rear wheel-end actual torque, a rear wheel-end actual torque validity bit, a powertrain wheel-end actual torque, and a powertrain wheel-end actual torque validity bit to the front/rear motor controller.

FIG. 6 is a flowchart illustrating a torque control method according to an exemplary embodiment. As shown in FIG. 6, the method in step S202 includes the following steps.

S301, acquiring a driving speed and a brake pedal opening degree of the vehicle, and determining a creep required torque and an accelerator required torque of the vehicle based on the driving speed and the brake pedal opening degree.

Optionally, during vehicle driving, the creep required torque can be obtained by querying a preset creep torque table according to a real-time driving speed and the brake pedal opening degree (i.e., a degree of brake pedal depression).

It should be noted that a creep function is turned on by default in the redundant VCU. Enabling conditions for turning on the creep function are as follows: the vehicle is in a drivable mode; the actual gear position of the vehicle is "D" gear /"R" gear; an AEB function is not activated. When any one of the following occurs, the creep required torque is set to 0: the creep function is disenabled; the EPB is engaged; the vehicle speed is greater than 10km/h; fault diagnosis feeds back that creep is prohibited; the accelerator pedal is not pressed; the vehicle is completely stationary (i.e., the vehicle speed is below 2 km/h) and the braking distance exceeds a set value or the master cylinder pressure is greater than 20 Bar.

When the creep function is not enabled or the calculated enabling conditions are not met, the default feedback creep required torque is 0. When the vehicle is not in D gear or R gear, the creep required torque is 0. Considering smoothness, a filtering processing needs to be performed on the creep required torque. When entering and exiting the creep function, an acceleration of the vehicle should be controlled within a certain range, and driving operations should be carried out to avoid obvious shaking, jerking, forward lash or other situations of the vehicle speed. Different preset creep torque tables correspond to different vehicle gear positions.

Optionally, during vehicle driving, the accelerator required torque can be obtained by querying a preset accelerator torque table according to the real-time driving speed and the brake pedal opening degree.

It should be noted that enabling preconditions for calculating the accelerator required torque are that: the vehicle is in a drivable mode; the actual gear position of the vehicle is D gear /R gear; and the AEB function is not activated. A target accelerator torque is set to 0 N·m when any one of the following conditions is met: a fault in the accelerator pedal is diagnosed; the EPB is engaged; dynamic parking brake is active; or an advanced driving assistance system (advanced driving assistance, ADAS) is active with a low-speed advanced/automatic emergency braking (low-speed advanced/automatic emergency braking, LAEB) function enabled.

When an accelerator required torque calculation module is not permitted to perform a calculation of the required torque, the default feedback for a current accelerator required torque is 0 Nm, and if the accelerator required torque at this moment is not 0 Nm, it should be rapidly reduced to 0 Nm as per a gradient. The target accelerator torque requested by the driver cannot be less than a minimum long-term available torque (wheel-end) of the powertrain and cannot be greater than a maximum long-term available torque (wheel-end) of the powertrain. When entering and exiting the accelerator required torque, the acceleration of the vehicle should be controlled within a certain range, and obvious shaking, jerking, forward lash of the vehicle speed or other poor driving performances should be avoided.

S302, determining the wheel-end required torque based on the creep required torque and the accelerator required torque.

Optionally, a sum of the creep required torque and the accelerator required torque can be determined as the wheel-end required torque.

S303, acquiring a motor actual torque of the vehicle, and determining the wheel-end actual torque and the axle-end actual torque based on the motor actual torque, a preset reduction ratio, a preset transmission ratio, and a preset efficiency.

Optionally, the front axle-end actual torque and the rear axle-end actual torque of the vehicle can be calculated according to the front motor actual torque and the rear motor actual torque. The calculation formulas are shown in Formula 1 and Formula 2:

T front axle=T front motor * preset front motor reduction ratio * preset transmission ratio * preset efficiency Formula 1         Formula 1

T rear axle=T rear motor * preset rear motor reduction ratio * preset transmission ratio * preset efficiency Formula 2         Formula 2

where, T front axle: the front axle-end actual torque; T front motor: the front motor actual torque; T rear axle: the rear axle-end actual torque; T rear motor: the rear motor actual torque.

Optionally, the vehicle actual torque (i.e., the axle-end actual torque) is a sum of the front axle-end actual torque and the rear axle-end actual torque.

Exemplarily, the preset front motor reduction ratio is 11.265, the preset rear motor reduction ratio is 12, and the preset efficiency is 0.99.

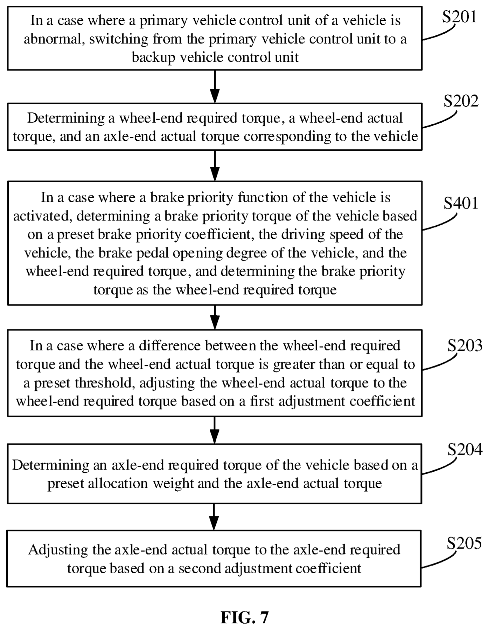

FIG. 7 is a flowchart illustrating yet another torque control method according to an exemplary embodiment. As shown in FIG. 7, after step S202 and before step S203, the method further includes the following steps.

S401, in a case where a brake priority function of the vehicle is activated, determining a brake priority torque of the vehicle based on a preset brake priority coefficient, the driving speed of the vehicle, the brake pedal opening degree of the vehicle, and the wheel-end required torque, and determining the brake priority torque as the wheel-end required torque.

It should be noted that enabling preconditions for activating the brake priority function are that: the vehicle is in a drivable mode; the actual gear position of the vehicle is D gear /R gear; the braking priority function is not blocked; the AEB function is not activated. The enabling preconditions for activating the brake priority function are that: if the brake pedal is pressed first, and then the accelerator pedal is pressed with the brake pedal not released, where the trigger time exceeds a preset duration (e.g., 0.5S), then the logic is considered valid; the brake pedal is pressed in other situations.

When the brake priority function is not activated, the default feedback brake priority torque is the wheel-end required torque obtained by adding the creep required torque and the accelerator required torque. After the brake priority function is activated, the wheel-end required torque is a torque obtained by the brake priority torque calculation (the power redundancy system has no energy recovery, and there is no negative torque situation after the brake priority is activated).

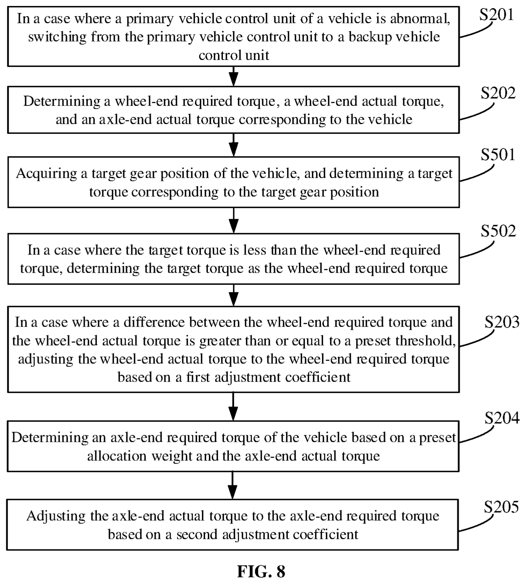

FIG. 8 is a flowchart illustrating yet another torque control method according to an exemplary embodiment. As shown in FIG. 8, after step S202 and before step S203, the method further includes the following steps.

S501, acquiring a target gear position of the vehicle, and determining a target torque corresponding to the target gear position.

The target torque is used to indicate a set maximum torque when the vehicle is in the target gear position.

Optionally, a safe vehicle speed of the target gear position of the vehicle can be obtained, and based on the safe vehicle speed of the target gear position of the vehicle, the target torque corresponding to the target gear position can be determined to limit the wheel-end required torque according to the target torque (i.e., a vehicle speed limit torque) corresponding to the target gear position.

It should be noted that enabling preconditions for limiting the wheel torque are that: the vehicle is in a drivable mode; the actual gear position of the vehicle is D gear /R gear. When a vehicle fault diagnosis involves a vehicle speed limit request, a limit torque in the vehicle speed limit request of the fault diagnosis shall take precedence. In the absence of a fault diagnosis request: if the vehicle is in R gear, the safe speed is 30km/h (can be calibrated); if the vehicle is in D gear, the safe speed is 120km/h (can be calibrated).

The wheel-end required torque may be limited as follows: take a minimum value between the speed limit torque in a normal mode and the speed limit torque in a fault mode.

S502, in a case where the target torque is less than the wheel-end required torque, determining the target torque as the wheel-end required torque.

Optionally, the vehicle speed limit torque can be arbitrated with the accelerator required torque, the creep required torque, and the brake priority torque through an vehicle wheel-end required torque coordination arbitration module. In a case where the target torque is less than the wheel-end required torque obtained by arbitration among the accelerator required torque, the creep required torque, and the brake priority torque, the target torque is determined as the wheel-end required torque.

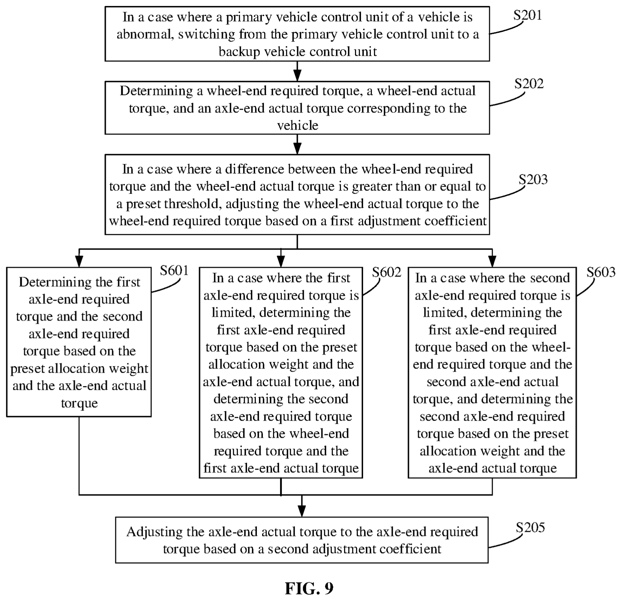

FIG. 9 is a flowchart illustrating a torque control method according to an exemplary embodiment. The vehicle includes: a first axle (i.e., the front axle) and a second axle (i.e., the rear axle). The axle-end required torque includes: a first axle-end required torque (i.e., the front axle-end required torque), a second axle-end required torque (i.e., the rear axle-end required torque); the axle-end actual torque includes: a first axle-end actual torque (i.e., the front axle-end actual torque) and a second axle-end actual torque (i.e., the rear axle-end actual torque). As shown in FIG. 9, the method in step S204 specifically includes step S601, step S602, or step S603.

S601, determining the first axle-end required torque and the second axle-end required torque based on the preset allocation weight and the axle-end actual torque.

S602, in a case where the first axle-end required torque is limited, determining the first axle-end required torque based on the preset allocation weight and the axle-end actual torque, and determining the second axle-end required torque based on the wheel-end required torque and the first axle-end actual torque.

Optionally, when performing the torque verification, considering the effectiveness of the torque verification, two calculation manners are provided for a posterior torque of the front axle and the rear axle of the vehicle: one is that the posterior torque is calculated according to the axle-end actual torque; the other is that the posterior torque is calculated according to the axle-end required torque. According to the actual effectiveness, two posterior value calculation manners can be switched through calibrated parameters. Users can switch according to the actual application effectiveness and choose the manner with better effect.

When performing the torque verification, in a case where the first axle-end required torque is limited, it is also possible to determine the first axle-end required torque based on the preset allocation weight and the axle-end actual torque, and determine the second axle-end required torque based on the wheel-end required torque and the first axle-end required torque.

S603, in a case where the second axle-end required torque is limited, determining the first axle-end required torque based on the wheel-end required torque and the second axle-end actual torque, and determining the second axle-end required torque based on the preset allocation weight and the axle-end actual torque.

Optionally, when performing the torque verification, in a case where the second axle-end required torque is limited, the first axle-end required torque can be determined based on the wheel-end required torque and the second axle-end required torque, and the second axle-end required torque can be determined based on preset allocation weight and the axle-end actual torque.

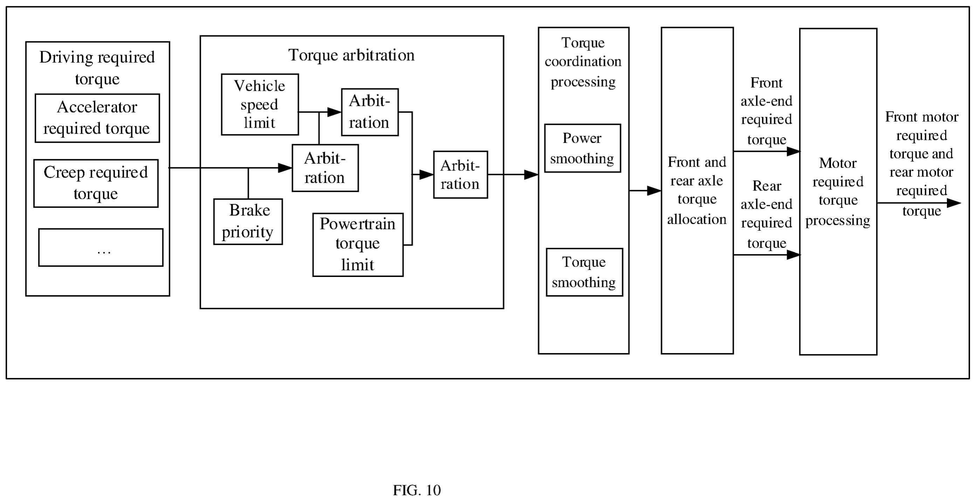

FIG. 10 is a structural block diagram illustrating a redundant VCU torque control system according to an exemplary embodiment. As shown in FIG. 10, a driving required torque is calculated based on the accelerator required torque, the creep required torque, and other torques; furthermore, torque arbitration is performed between the calculated driving required torque and the brake priority, a vehicle speed limit, as well as a powertrain torque limit to obtain the arbitrated driving required torque, then a torque coordination processing is performed on the arbitrated driving required torque for power smoothing and torque smoothing.

A front and rear axle torque allocation is performed on the driving required torque after torque coordination processing to obtain the front axle-end required torque and the rear axle-end required torque. Based on the front axle-end required torque and the rear axle-end required torque, a motor required torque processing is performed to obtain the front motor required torque and a rear motor required torque.

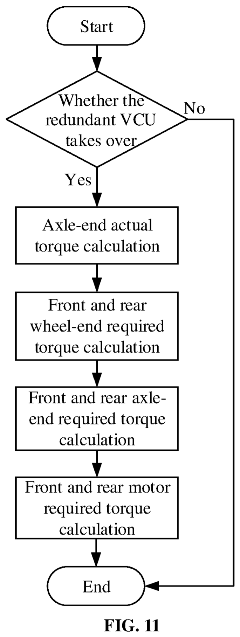

FIG. 11 is a flowchart illustrating a redundant VCU torque control according to an exemplary embodiment. As shown in FIG. 11, a first step is to determine whether the redundant VCU takes over, if the redundant VCU takes over does not take over, the process ends; if the redundant VCU takes over, an axle-end actual torque calculation, a front and rear wheel-end required torque calculation, a front and rear axle-end required torque calculation, and a front and rear motor required torque calculation of the vehicle are carried out sequentially.

The above mainly introduces the solution provided by the embodiments of the present application from the perspective of methods. In order to achieve the above functions, a torque control apparatus or an electronic device includes corresponding hardware structures and/or software modules for implementing the respective functions. Those skilled in this field should easily realize that the present application can be implemented in the form of hardware or a combination of hardware and computer software, based on the units and algorithm steps described in the embodiments disclosed in herein. Whether a certain function is executed through hardware or computer software driven hardware depends on the specific application and design constraints of the technical solution. Professional technicians can use different methods to achieve the described functions for each specific application, but such implementation should not be considered beyond the scope of this application.

The embodiments of the present application can exemplarily divide the torque control device or electronic device into functional modules according to the above methods. For example, the torque control apparatus or the electronic device may include various functional modules corresponding to each functional division, or two or more functions may be integrated into one processing module. The integrated modules mentioned above can be implemented in the form of hardware or software functional modules. It should be noted that the division of modules in the embodiments of this application is illustrative and only a logical functional division. In actual implementation, there may be other division methods.

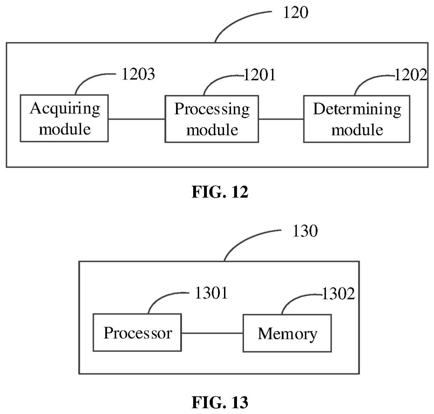

FIG. 12 is a block diagram illustrating a torque control apparatus according to an exemplary embodiment. Referring to FIG. 12, the torque control apparatus 90 includes a processing module 1201 and a determining module 1202.

The processing module 1201 is configured to, in a case where a primary vehicle control unit of a vehicle is abnormal, switch from the primary vehicle control unit to a backup vehicle control unit.

The determining module 1202 is configured to determine a wheel-end required torque, a wheel-end actual torque, and an axle-end actual torque corresponding to the vehicle.

The processing module 1201 is further configured to, in a case where a difference between the wheel-end required torque and the wheel-end actual torque is greater than or equal to a preset threshold, adjust the wheel-end actual torque to the wheel-end required torque based on a first adjustment coefficient, where the first adjustment coefficient is used to control a rate of change of the wheel-end actual torque.

The determining module 1202 is further configured to determine an axle-end required torque of the vehicle based on a preset allocation weight and the axle-end actual torque.

The processing module 1201 is further configured to adjust the axle-end actual torque to the axle-end required torque based on a second adjustment coefficient, where the second adjustment coefficient is used to control a rate of change of the axle-end actual torque.

In a possible implementation, the torque control apparatus further includes an acquiring module 1203; where the acquiring module 1203 is configured to acquire a driving speed and a brake pedal opening degree of the vehicle; the determining module 1202 is further configured to determine a creep required torque and an accelerator required torque of the vehicle based on the driving speed and the brake pedal opening degree; the determining module 1202 is further configured to determine the wheel-end required torque based on the creep required torque and the accelerator required torque; the acquiring module 1203 is further configured to acquire a motor actual torque of the vehicle; the determining module 1202 is further configured to determine the wheel-end actual torque and the axle-end actual torque based on the motor actual torque, a preset reduction ratio, a preset transmission ratio, and a preset efficiency.

In a possible implementation, the processing module 1201 is further configured to: in a case where a brake priority function of the vehicle is activated, determine a brake priority torque of the vehicle based on a preset brake priority coefficient, the driving speed of the vehicle, the brake pedal opening degree of the vehicle, and the wheel-end required torque, and determine the brake priority torque as the wheel-end required torque.

In a possible implementation, the acquiring module 1203 is further configured to acquire a target gear position of the vehicle; the determining module 1202 is further configured to determine a target torque corresponding to the target gear position, where the target torque is used to indicate a set maximum torque when the vehicle is in the target gear position; the determining module 1202 is further configured to: in a case where the target torque is less than the wheel-end required torque, determine the target torque as the wheel-end required torque.

In a possible implementation, the vehicle includes: a first axle and a second axle, the axle-end required torque includes: a first axle-end required torque and a second axle-end required torque, and the axle-end actual torque includes: a first axle-end actual torque and a second axle-end actual torque; the determining module 1202 is further configured to determine the first axle-end required torque and the second axle-end required torque based on the preset allocation weight and the axle-end actual torque; the determining module 1202 is further configured to: in a case where the first axle-end required torque is limited, determine the first axle-end required torque based on the preset allocation weight and the axle-end actual torque, and determine the second axle-end required torque based on the wheel-end required torque and the first axle-end actual torque; the determining module 1202 is further configured to: in a case where the second axle-end required torque is limited, determine the first axle-end required torque based on the wheel-end required torque and the second axle-end actual torque, and determine the second axle-end required torque based on the preset allocation weight and the axle-end actual torque.

Regarding the apparatus in the above embodiments, the specific ways in which each module performs operations have been described in detail in the relevant embodiments of the method, and will not be elaborated here.

FIG. 13 is a block diagram illustrating an electronic device according to an exemplary embodiment. As shown in FIG. 13, an electronic device 130 includes but is not limited to: a processor 1301 and a memory 1302.

The memory 1302 described above is configured to store executable instructions of the processor 1301. It can be understood that the processor 1301 is configured to execute the instructions to implement the torque control method in the above embodiments.

It should be noted that those skilled in the art can understand that the electronic device structure shown in FIG. 13 does not constitute a limitation on the electronic device. The electronic device may include more or fewer components than shown in FIG. 13, or combine certain components, or with different component arrangements.

The processor 1301 is a control center of the electronic device, which connects various parts of the entire electronic device through various interfaces and circuits. By running or executing software programs and/or modules stored in the memory 1302, as well as calling data stored in the memory 1302, it performs various functions of the electronic device and processes data, thereby monitoring the electronic device as a whole. The processor 1301 may include one or more processing modules. Optionally, the processor 1301 can integrate an application processor and a modulation and demodulation processor, where the application processor mainly handles operating systems, user interfaces, and application programs, and the modulation and demodulation processor mainly handles wireless communication. It can be understood that the above modulation and demodulation processors may not be integrated into the processor 1301.

The memory 1302 can be used to store software programs and various data. The memory 1302 may mainly include a program storage area and a data storage area, where the program storage area may store an operating system, at least one application program required by a functional module (such as an acquisition unit, a determination unit, a processing unit, etc.), and so on. In addition, the memory 1302 may include highspeed random access memory, as well as non-volatile memory such as at least one magnetic disk storage device, flash memory device, or other volatile solid-state storage device.

In an exemplary embodiment, a computer-readable storage medium including instructions is also provided, such as the memory 1302 including instructions, which can be executed by the processor 1301 of the electronic device 130 to implement the torque control method in the above embodiments.

In a practical implementation, the functions of the processing module 1201, the determining module 1202, and the acquiring module 1203 in FIG. 12 can all be implemented by the processor 1301 in FIG. 13 calling the computer program stored in the memory 1302. For the specific execution process, a reference may be made to the description of the torque control method in the previous embodiment, which will not be repeated here.

Optionally, the computer-readable storage medium can be a non temporary computer-readable storage medium, such as a read-only memory (read-only memory, ROM), a random access memory (random access memory, RAM), a CD-ROM, a magnetic tape, a floppy disk, and an optical data storage device, etc.

In an exemplary embodiment, a vehicle including the torque control apparatus is also provided, which can achieve the torque control method in the above embodiments through the torque control apparatus.

In an exemplary embodiment, the present application also provides a computer program product including one or more instructions, which can be executed by the processor 1301 of the electronic device to implement the torque control method in the above embodiments.

It should be noted that when the instructions in the computer-readable storage medium or one or more instructions in the computer program product are executed by the processor of the electronic device, the various processes of the torque control method embodiments can be implemented, and the same technical effects as the torque control method can be achieved. To avoid repetition, they will not be elaborated here.

Through the description of the above implementations, technical personnel in the art can clearly understand that for the convenience and simplicity of the description, the division of the above functional modules is given only as an example. In practical applications, the above functions can be assigned to different functional modules as needed, that is, the internal structure of the apparatus can be divided into different functional modules to complete the full classification or partial functions described above.

In the several embodiments provided in the present application, it should be understood that the disclosed apparatuses and methods can be implemented in other ways. For example, the apparatus embodiments described above are only illustrative. For example, the division of modules or units is only a logical functional division. In practical implementation, there may be other division methods, such as multiple units or components being combined or integrated into another apparatus, or some features being ignored or not executed. On the other hand, the mutual coupling or direct coupling or communication connection displayed or discussed can be indirect coupling or communication connection through some interfaces, apparatuses or units, which can be electrical, mechanical or other forms.

The units described as separate components may or may not be physically separated. The component displayed as a unit can be a physical unit or multiple physical units, which can be located in one place or distributed to multiple different places. Partial or full classification units can be selected according to actual needs to achieve the solution purpose of this embodiment.

In addition, the functional units in various embodiments of the present application can be integrated into one processing unit, or physically exist separately, or two or more units are integrated into one unit. The integrated units mentioned above can be implemented in the form of hardware or software functional units.

When integrated units are implemented in the form of software functional units and sold or used as independent products, they can be stored in a readable storage medium. Based on this understanding, the technical solution of the embodiments of the present application essentially or the part contributing to the existing technology, or the fully classified or some of the technical solution can be embodied in the form of a software product, which is stored in a storage medium and includes several instructions to enable a device (which can be a single chip microcomputer, a chip, etc.) or a processor (processor) to execute the fully classified or portion of the steps of the methods in the various embodiments of the present application. The storage medium described above includes: a USB flash drive, a portable hard drive, a ROM, a RAM, various medium such as a magnetic disk or an optical disk that can store program code.

The above are merely specific embodiments of the present application, and the protection scope of this application is not limited thereto. Any variations or substitutions within the technical scope disclosed in this application should be included within the protection scope of this application. Therefore, the protection scope of this application should be subject to the protection scope of the claims.

**Claims**

1. A torque control method, comprising:

    in a case where a primary vehicle control unit of a vehicle is abnormal, switching from the primary vehicle control unit to a backup vehicle control unit;
    determining a wheel-end required torque, a wheel-end actual torque, and an axle-end actual torque corresponding to the vehicle;
    in a case where a difference between the wheel-end required torque and the wheel-end actual torque is greater than or equal to a preset threshold, adjusting the wheel-end actual torque to the wheel-end required torque based on a first adjustment coefficient, wherein the first adjustment coefficient is used to control a rate of change of the wheel-end actual torque;
    determining an axle-end required torque of the vehicle based on a preset allocation weight and the axle-end actual torque;
    adjusting the axle-end actual torque to the axle-end required torque based on a second adjustment coefficient, wherein the second adjustment coefficient is used to control a rate of change of the axle-end actual torque.

2. The method according to claim 1, wherein the determining the wheel-end required torque, the wheel-end actual torque, and the axle-end actual torque corresponding to the vehicle comprises:

    acquiring a driving speed and a brake pedal opening degree of the vehicle, and determining a creep required torque and an accelerator required torque of the vehicle based on the driving speed and the brake pedal opening degree;
    determining the wheel-end required torque based on the creep required torque and the accelerator required torque;
    acquiring a motor actual torque of the vehicle, and determining the wheel-end actual torque and the axle-end actual torque based on the motor actual torque, a preset reduction ratio, a preset transmission ratio, and a preset efficiency.

3. The method according to claim 1 or 2, wherein the method further comprises:

    in a case where a brake priority function of the vehicle is activated, determining a brake priority torque of the vehicle based on a preset brake priority coefficient, the driving speed of the vehicle, the brake pedal opening degree of the vehicle, and the wheel-end required torque, and determining the brake priority torque as the wheel-end required torque.

4. The method according to claim 1 or 2, wherein the method further comprises:

    acquiring a target gear position of the vehicle, and determining a target torque corresponding to the target gear position, wherein the target torque is used to indicate a set maximum torque when the vehicle is in the target gear position; and
    in a case where the target torque is less than the wheel-end required torque, determining the target torque as the wheel-end required torque.

5. The method according to claim 1 or 2, wherein the vehicle comprises: a first axle and a second axle, the axle-end required torque comprises: a first axle-end required torque and a second axle-end required torque, and the axle-end actual torque comprises:
    a first axle-end actual torque and a second axle-end actual torque;
    wherein the determining the axle-end required torque of the vehicle based on the preset allocation weight and the axle-end actual torque comprises:

    determining the first axle-end required torque and the second axle-end required torque based on the preset allocation weight and the axle-end actual torque; or
    in a case where the first axle-end required torque is limited, determining the first axle-end required torque based on the preset allocation weight and the axle-end actual torque, and determining the second axle-end required torque based on the wheel-end required torque and the first axle-end actual torque; or
    in a case where the second axle-end required torque is limited, determining the first axle-end required torque based on the wheel-end required torque and the second axle-end actual torque, and determining the second axle-end required torque based on the preset allocation weight and the axle-end actual torque.

6. A torque control apparatus, comprising: a processing module and a determining module;

wherein the processing module is configured to, in a case where a primary vehicle control unit of a vehicle is abnormal, switch from the primary vehicle control unit to a backup vehicle control unit;
the determining module is configured to determine a wheel-end required torque, a wheel-end actual torque, and an axle-end actual torque corresponding to the vehicle;
the processing module is further configured to, in a case where a difference between the wheel-end required torque and the wheel-end actual torque is greater than or equal to a preset threshold, adjust the wheel-end actual torque to the wheel-end required torque based on a first adjustment coefficient, wherein the first adjustment coefficient is used to control a rate of change of the wheel-end actual torque;
the determining module is further configured to determine an axle-end required torque of the vehicle based on a preset allocation weight and the axle-end actual torque;
the processing module is further configured to adjust the axle-end actual torque to the axle-end required torque based on a second adjustment coefficient, wherein the second adjustment coefficient is used to control a rate of change of the axle-end actual torque.

7. The torque control apparatus according to claim 6, wherein the torque control apparatus further comprises an acquiring module;

wherein the acquiring module is configured to acquire a driving speed and a brake pedal opening degree of the vehicle;
the determining module is further configured to determine a creep required torque and an accelerator required torque of the vehicle based on the driving speed and the brake pedal opening degree;
the determining module is further configured to determine the wheel-end required torque based on the creep required torque and the accelerator required torque;
the acquiring module is further configured to acquire a motor actual torque of the vehicle;
the determining module is further configured to determine the wheel-end actual torque and the axle-end actual torque based on the motor actual torque, a preset reduction ratio, a preset transmission ratio, and a preset efficiency.

8. An electronic device, comprising:

a processor, and a memory for storing instructions executable by the processor; wherein the processor is configured to execute the instructions to implement the method according to any one of claims 1 to 5.

9. A computer-readable storage medium, wherein when computer-executed instructions stored in the computer-readable storage medium are executed by a processor of an electronic device, the electronic device is caused to execute the method according to any one of claims 1 to 5.

10. A vehicle, comprising: the torque control apparatus according to claim 6 or 7, wherein the vehicle is configured to implement the method according to any one of claims 1 to 5.

**FIG. 1**

| |
|---|
| In a case where a primary vehicle control unit of a vehicle is abnormal, switching from the primary vehicle control unit to a backup vehicle control unit — S201 |

↓

| |
|---|
| Determining a wheel-end required torque, a wheel-end actual torque, and an axle-end actual torque corresponding to the vehicle — S202 |

↓

| |
|---|
| In a case where a difference between the wheel-end required torque and the wheel-end actual torque is greater than or equal to a preset threshold, adjusting the wheel-end actual torque to the wheel-end required torque based on a first adjustment coefficient — S203 |

↓

| |
|---|
| Determining an axle-end required torque of the vehicle based on a preset allocation weight and the axle-end actual torque — S204 |

↓

| |
|---|
| Adjusting the axle-end actual torque to the axle-end required torque based on a second adjustment coefficient — S205 |

**FIG. 2**

**FIG. 3**

**FIG. 4**

| VCU | | FMIPU/RMIPU |
|---|---|---|

Gear position management module → Various gear position signals →

High-voltage electrical management module → Vehicle drivable status →

Redundant takeover module → Redundant power takeover signal →

Mechanical system capability estimation module → Maximum long-term available wheel-end torque at the front axle, minimum long-term available wheel-end torque at the front axle, maximum long-term available wheel-end torque at the rear axle, minimum long-term available wheel-end torque at the rear axle →

**Torque allocation module**

Front motor actual torque and rear motor actual torque ←

Front wheel-end required torque, front wheel-end required torque validity bit, rear wheel-end required torque, rear wheel-end required torque validity bit, front wheel-end actual torque, front wheel-end actual torque validity bit, rear wheel-end actual torque, rear wheel-end actual torque validity bit, powertrain wheel-end actual torque, and powertrain wheel-end actual torque validity bit

**Front/rear motor controller**

**FIG. 5**

Acquiring a driving speed and a brake pedal opening degree of the vehicle, and determining a creep required torque and an accelerator required torque of the vehicle based on the driving speed and the brake pedal opening degree — S301

↓

Determining the wheel-end required torque based on the creep required torque and the accelerator required torque — S302

↓

Acquiring a motor actual torque of the vehicle, and determining the wheel-end actual torque and the axle-end actual torque based on the motor actual torque, a preset reduction ratio, a preset transmission ratio, and a preset efficiency — S303

**FIG. 6**

In a case where a primary vehicle control unit of a vehicle is abnormal, switching from the primary vehicle control unit to a backup vehicle control unit — S201

Determining a wheel-end required torque, a wheel-end actual torque, and an axle-end actual torque corresponding to the vehicle — S202

In a case where a brake priority function of the vehicle is activated, determining a brake priority torque of the vehicle based on a preset brake priority coefficient, the driving speed of the vehicle, the brake pedal opening degree of the vehicle, and the wheel-end required torque, and determining the brake priority torque as the wheel-end required torque — S401

In a case where a difference between the wheel-end required torque and the wheel-end actual torque is greater than or equal to a preset threshold, adjusting the wheel-end actual torque to the wheel-end required torque based on a first adjustment coefficient — S203

Determining an axle-end required torque of the vehicle based on a preset allocation weight and the axle-end actual torque — S204

Adjusting the axle-end actual torque to the axle-end required torque based on a second adjustment coefficient — S205

**FIG. 7**

In a case where a primary vehicle control unit of a vehicle is abnormal, switching from the primary vehicle control unit to a backup vehicle control unit — S201

Determining a wheel-end required torque, a wheel-end actual torque, and an axle-end actual torque corresponding to the vehicle — S202

Acquiring a target gear position of the vehicle, and determining a target torque corresponding to the target gear position — S501

In a case where the target torque is less than the wheel-end required torque, determining the target torque as the wheel-end required torque — S502

In a case where a difference between the wheel-end required torque and the wheel-end actual torque is greater than or equal to a preset threshold, adjusting the wheel-end actual torque to the wheel-end required torque based on a first adjustment coefficient — S203

Determining an axle-end required torque of the vehicle based on a preset allocation weight and the axle-end actual torque — S204

Adjusting the axle-end actual torque to the axle-end required torque based on a second adjustment coefficient — S205

**FIG. 8**

In a case where a primary vehicle control unit of a vehicle is abnormal, switching from the primary vehicle control unit to a backup vehicle control unit — S201

Determining a wheel-end required torque, a wheel-end actual torque, and an axle-end actual torque corresponding to the vehicle — S202

In a case where a difference between the wheel-end required torque and the wheel-end actual torque is greater than or equal to a preset threshold, adjusting the wheel-end actual torque to the wheel-end required torque based on a first adjustment coefficient — S203

Determining the first axle-end required torque and the second axle-end required torque based on the preset allocation weight and the axle-end actual torque — S601

In a case where the first axle-end required torque is limited, determining the first axle-end required torque based on the preset allocation weight and the axle-end actual torque, and determining the second axle-end required torque based on the wheel-end required torque and the first axle-end actual torque — S602

In a case where the second axle-end required torque is limited, determining the first axle-end required torque based on the wheel-end required torque and the second axle-end actual torque, and determining the second axle-end required torque based on the preset allocation weight and the axle-end actual torque — S603

Adjusting the axle-end actual torque to the axle-end required torque based on a second adjustment coefficient — S205

**FIG. 9**

FIG. 10

Start

Whether the redundant VCU takes over

No

Yes

Axle-end actual torque calculation

Front and rear wheel-end required torque calculation

Front and rear axle-end required torque calculation

Front and rear motor required torque calculation

End

**FIG. 11**

120

| Acquiring module | Processing module | Determining module |
|---|---|---|

1203 1201 1202

**FIG. 12**

130

| Processor | Memory |
|---|---|

1301 1302

**FIG. 13**

## INTERNATIONAL SEARCH REPORT

| | International application No. |
|---|---|
| | **PCT/CN2025/072873** |

**A.    CLASSIFICATION OF SUBJECT MATTER**

B60L15/20(2006.01)i;  B60W50/023(2012.01)i;  B60W50/00(2006.01)i;  B60W10/08(2006.01)i

According to International Patent Classification (IPC) or to both national classification and IPC

**B.    FIELDS SEARCHED**

Minimum documentation searched (classification system followed by classification symbols)

IPC,CPC:B60L,B60W

Documentation searched other than minimum documentation to the extent that such documents are included in the fields searched

Electronic data base consulted during the international search (name of data base and, where practicable, search terms used)

CNTXT, ENTXT, DWPI, CJFD: 闭环, 车辆轮端扭矩, 轮端, 轴端, 扭矩, 实际扭矩, 需求扭矩, 蠕行, 爬行, 油门, 制动优先系数: closed w loop, vehicle, car, shaft, wheel, torque, torsion, real+, practic+, requirement, demand+, need+, rawl, creep, throttle, brak+

**C.    DOCUMENTS CONSIDERED TO BE RELEVANT**

| Category* | Citation of document, with indication, where appropriate, of the relevant passages | Relevant to claim No. |
|---|---|---|
| PX | CN 118082532 A (CHONGQING CHANG'AN TECHNOLOGY CO., LTD.) 28 May 2024 (2024-05-28)<br>claims 1-10 | 1-10 |
| Y | CN 114013295 A (SAIC MOTOR CORP., LTD.) 08 February 2022 (2022-02-08)<br>description, paragraphs 3-195, and figures 1-7 | 1-10 |
| Y | CN 117068133 A (ZHEJIANG ZEEKR INTELLIGENT TECHNOLOGY CO., LTD. et al.)<br>17 November 2023 (2023-11-17)<br>description, paragraphs 5-185, and figures 1-5 | 1-10 |
| Y | CN 113619560 A (CHINA FAW GROUP CO., LTD.) 09 November 2021 (2021-11-09)<br>description, paragraphs 5-139, and figures 1-6 | 2-3, 7 |
| Y | CN 111645537 A (EVERGRANDE HENGCHI NEW ENERGY VEHICLE RESEARCH<br>INSTITUTE (SHANGHAI) CO., LTD.) 11 September 2020 (2020-09-11)<br>description, paragraphs 8-105, and figures 1-4 | 4 |

☑ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 April 2025** | **29 April 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/072873** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110040144 A (ZHEJIANG GEELY AUTOMOBILE HOLDINGS LIMITED et al.) 23 July 2019 (2019-07-23)<br>    entire document | 1-10 |
| A | CN 112622868 A (CHINA FAW GROUP CO., LTD.) 09 April 2021 (2021-04-09)<br>    entire document | 1-10 |
| A | CN 116443019 A (CHONGQING CHANG'AN AUTOMOBILE CO., LTD.) 18 July 2023 (2023-07-18)<br>    entire document | 1-10 |
| A | CN 117246332 A (CHONGQING CHANG'AN AUTOMOBILE CO., LTD.) 19 December 2023 (2023-12-19)<br>    entire document | 1-10 |
| A | WO 2021219597 A1 (ROBERT BOSCH GMBH) 04 November 2021 (2021-11-04)<br>    entire document | 1-10 |

Form PCT/ISA/210 (second sheet) (July 2022)

**INTERNATIONAL SEARCH REPORT**
Information on patent family members

International application No.

**PCT/CN2025/072873**

| Patent document cited in search report | | | Publication date (day/month/year) | Patent family member(s) | | | Publication date (day/month/year) |
|---|---|---|---|---|---|---|---|
| CN | 118082532 | A | 28 May 2024 | None | | | |
| CN | 114013295 | A | 08 February 2022 | None | | | |
| CN | 117068133 | A | 17 November 2023 | None | | | |
| CN | 113619560 | A | 09 November 2021 | None | | | |
| CN | 111645537 | A | 11 September 2020 | None | | | |
| CN | 110040144 | A | 23 July 2019 | None | | | |
| CN | 112622868 | A | 09 April 2021 | None | | | |
| CN | 116443019 | A | 18 July 2023 | None | | | |
| CN | 117246332 | A | 19 December 2023 | None | | | |
| WO | 2021219597 | A1 | 04 November 2021 | EP | 4143044 | A1 | 08 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202410101908